# FASCICULE DE BREVET EUROPEEN

(11) **EP 2 686 718 B1**
(45) Date de publication et mention de la délivrance du brevet: **04.03.2020**
(21) Numéro de dépôt: 12713213.2
(22) Date de dépôt: 08.03.2012
(51) Int. Cl.: G02B 3/08, G02B 3/14, G02B 26/06, G02C 7/02, G02F 1/1333, G02C 7/06

(54) **ELEMENT OPTIQUE TRANSPARENT A PLUSIEURS COUCHES CONSTITUEES DE PAVAGES CELLULAIRES**
TRANSPARENTES OPTISCHES ELEMENT MIT MEHREREN SCHICHTEN AUS ZELLULAREN FLIESEN
TRANSPARENT OPTICAL ELEMENT HAVING A PLURALITY OF LAYERS CONSISTING OF CELLULAR TILING

(30) Priorité: 16.03.2011 FR 1152134
(43) Date de publication de la demande: 22.01.2014
(73) Titulaire: Essilor International, 94220 Charenton-le-Pont (FR); Centre National de la Recherche Scientifique (C.N.R.S.), 75794 Paris Cedex 16 (FR)
(72) Inventeur: PELOUX, Marius, F-94220 Charenton-le-pont (FR); CHAVEL, Pierre, 91400 Orsay (FR)
(74) Mandataire: Plasseraud IP
(86) Numéro de dépôt international: PCT/FR2012/050484
(87) Numéro de publication internationale: WO 2012/146843

(56) Documents cités:
- EP-A1- 2 097 784
- WO-A1-2004/008189
- WO-A2-2004/049044
- FR-A1- 2 879 757

## Description

La présente invention concerne un élément optique transparent à plusieurs couches qui sont constituées de pavages cellulaires respectifs.

Dans le cadre de la présente description, on entend par élément optique transparent un composant qui est destiné à former une image d'une scène à partir de lumière qui est issue de cette scène et qui traverse l'élément. Par exemple, ce peut être une lentille optique, une lentille ophtalmique telle qu'un verre de lunettes, une lentille de contact, un implant oculaire, etc. Eventuellement, un tel élément peut posséder une structure de Fresnel pour augmenter la puissance optique qui peut être obtenue compte tenu de contraintes liées au mode de production de l'élément, à son épaisseur, au matériau utilisé, etc.

Bien qu'un tel élément optique transparent puisse posséder diverses fonctions optiques additionnelles, telles qu'un pouvoir absorbant, un pouvoir polarisant, un renforcement de contraste, etc, sa fonction de formation d'image peut être caractérisée par une distribution d'un déphasage optique que produit l'élément dans une surface déterminée, pour une onde lumineuse monochromatique déterminée qui traverse l'élément. De façon générale, l'élément optique transparent possède une surface utile qui s'étend transversalement par rapport à un axe optique. Une direction moyenne de propagation de l'onde lumineuse peut alors être choisie pour être superposée à cet axe, et la distribution du déphasage optique peut être déterminée à l'intérieur de la surface utile de l'élément.

Il est connu de réaliser un tel élément optique transparent qui soit de nature numérique («digital» en anglais), ou pixellisée. Dans ce cas, le déphasage optique possède des valeurs discrètes qui sont réalisées en des points qui constituent un échantillonnage de la surface utile de l'élément optique transparent. De façon simplifiée, le déphasage optique pourrait être constant dans une zone limitée autour de chaque point d'échantillonnage, appelée couramment cellule. La valeur du déphasage optique de l'élément en tout point de chaque cellule serait donc égale à celle du point d'échantillonnage qui est situé dans cette cellule. D'une façon plus réaliste, le déphasage n'est pas constant à l'intérieur de chaque cellule, mais est intermédiaire entre une valeur minimale et une valeur maximale qui sont fixées par une fonction de déphasage cible pour cette cellule. Les cellules sont contiguës dans la surface utile de l'élément optique, et forment un pavage de cette surface. La fonction dioptrique réelle de l'élément optique transparent numérique résulte alors de la combinaison de ce pavage avec les valeurs du déphasage optique qui sont réalisées dans toutes les cellules.

De façon aussi connue, le déphasage optique Δϕ pour une onde lumineuse monochromatique est égal au produit du double du nombre pi par la longueur de traversée H de chaque cellule, et par la différence entre la valeur n d'indice de réfraction du matériau transparent qui remplit cette cellule et la valeur d'indice de l'air. Autrement dit : Δϕ = 2π·H·(n-1)/λ avec λ représentant la longueur d'onde. Une première façon de réaliser l'élément optique transparent peut alors consister à varier la valeur de l'indice de réfraction du matériau de remplissage des cellules, entre des cellules différentes de l'élément. Dans ce cas, toutes les cellules peuvent avoir une même profondeur, qui est mesurée selon l'axe optique de l'élément. Une autre façon de réaliser l'élément optique transparent peut consister à réaliser des cellules de profondeur variable, en utilisant un même matériau transparent homogène pour remplir toutes les cellules. Par exemple, l'élément optique peut être constitué d'une lame transparente homogène, éventuellement courbe, qui possède une épaisseur variable par paliers. Pour cela, l'une au moins des faces de la lame peut posséder des valeurs de hauteur sagittale qui varient entre des cellules différentes du pavage de cette face.

Mais de façon générale, un élément optique transparent de type numérique présente les inconvénients suivants :
- les cellules individuelles dans lesquelles le déphasage optique est susceptible de prendre des valeurs différentes ont une taille minimale, qui est en général déterminée par la technologie de fabrication de l'élément. Cette taille minimale limite spatialement l'échantillonnage d'une fonction de distribution du déphasage optique qui est utilisée comme cible pour réaliser une fonction dioptrique voulue. Autrement dit, la fonction de distribution réelle du déphasage optique pour l'élément numérique ne reproduit qu'approximativement la fonction de distribution cible. L'écart entre ces deux fonctions de distribution constitue un défaut de la fonction dioptrique qui est réellement produite par l'élément optique. Tel est le cas, notamment, lorsque la fonction de distribution cible est continue, ou continue à l'intérieur de portions de la surface utile de l'élément ;
- le nombre de valeurs discrètes différentes qui sont réalisables pour le déphasage optique dans chaque cellule, est aussi limité. Par exemple, seize à cent vingt-huit valeurs différentes peuvent être réalisées seulement. A cause de ce nombre limité de valeurs possibles, un écart peut exister entre la valeur du déphasage optique qui est produite en chacun des points d'échantillonnage de l'élément optique numérique et la valeur de la fonction de distribution cible au même point. Cette limitation du nombre de valeurs différentes qui peuvent être réalisées pour le déphasage optique à l'intérieur de chaque cellule est différente de la limitation qui résulte de la taille minimale des cellules. Mais elle contribue de façon additionnelle à l'écart entre la fonction de distribution réelle du déphasage optique de l'élément numérique et la fonction de distribution cible ;
- l'intervalle des valeurs qui sont possibles pour le déphasage optique dans chaque cellule de l'élément est lui-même limité. Autrement dit, les déphasages optiques qui sont produits dans les cellules de l'élément sont contenus entre une valeur minimale et une valeur maximale. Ces valeurs minimale et maximale résultent aussi de la technologie de fabrication de l'élément. Toutefois, l'intervalle apparent des valeurs du déphasage optique est couramment augmenté en réalisant des sauts de phase qui sont multiples du double de pi pour une longueur d'onde donnée appelée longueur d'onde nominale. Cette longueur d'onde nominale peut être située autour de 550 nm (nanomètre), par exemple. Mais un chromatisme en résulte pour la fonction dioptrique qui est réellement produite par l'élément, surtout lorsque l'amplitude de chaque saut de phase est égale à un nombre entier pair de fois pi qui est faible. Un tel chromatisme est alors gênant pour de nombreuses applications ; et
- les discontinuités du déphasage optique aux limites de séparation entre des cellules contiguës du pavage de la surface de l'élément optique numérique diffusent une partie de l'onde lumineuse incidente. Autrement dit, une fraction de l'énergie de cette onde lumineuse n'est pas simplement transmise par l'élément conformément à sa fonction de distribution du déphasage optique, mais la direction de propagation est en plus déviée latéralement. Cette partie diffusée de l'onde forme alors un voile lumineux qui réduit le contraste de l'image qui est formée par l'élément optique. Cette réduction du contraste peut être considérée comme une diminution de la transparence de l'élément. Lorsque le réseau des limites de séparation entre les cellules du pavage est périodique, la partie diffusée de l'onde incidente peut former des images parasites ou être concentrée dans des directions de diffraction privilégiées, qui sont aussi susceptibles de gêner l'utilisation de l'élément optique.

Le document WO 2004/008189 divulgue des éléments optiques dans lesquels des portions avec des valeurs différentes d'indice de réfraction sont juxtaposées sans séparations.

Le document WO 2004/049044 concerne un panneau d'affichage à cristaux liquides, qui est destiné à former des images inscrites dans sa surface.

Le document FR 2 879 757 concerne des éléments optiques transparents à cellules.

Dans ces conditions, la présente invention vise à réduire ou supprimer certains au moins des inconvénients cités plus haut.

Plus particulièrement, un premier but de l'invention consiste à proposer un élément optique transparent à cellules qui puisse présenter un écart réduit entre sa fonction de distribution de déphasage optique et une fonction de distribution cible, cette dernière pouvant être continue ou continue par portions.

Un deuxième but de l'invention consiste à proposer un élément optique transparent à cellules qui présente un chromatisme, notamment un chromatisme axial, qui soit réduit.

Pour atteindre ces buts et d'autres, l'invention propose un élément optique transparent selon la revendication 1. D'autres modes de réalisation sont définis dans les revendications dépendantes.

Ainsi, l'élément optique transparent de l'invention peut être de type numérique.

Ainsi, dans la surface de projection, les cellules d'une des couches sont elles-mêmes divisées par des limites intercellulaires de l'autre couche. La superposition des deux couches apparaît alors divisée en cellules utiles qui ont des dimensions inférieures ou égales à celles des cellules de chaque couche. Autrement dit, la superposition de couches selon l'invention permet de réduire une taille apparente de cellule utile pour produire une fonction dioptrique déterminée. Pour cette raison, la fonction de distribution du déphasage optique de l'élément de l'invention peut présenter un écart qui est réduit par rapport à une fonction de distribution cible, notamment par rapport à une fonction de distribution cible qui est continue ou continue par portions. Ceci a pour effet de diminuer l'intensité de la lumière parasite qui est diffractée et de mieux la répartir angulairement. Celle-ci est alors moins perceptible.

En outre, le nombre des valeurs possibles pour le déphasage optique total de l'élément résulte d'une combinaison des valeurs qui peuvent être réalisées pour chacune des couches. Il est donc supérieur au nombre de valeurs possibles pour chaque couche. Par conséquent, pour cette raison aussi il est possible de reproduire plus précisément une fonction de distribution cible de déphasage optique avec un élément optique transparent selon l'invention.

Simultanément, l'intervalle des valeurs du déphasage optique total qui sont possibles pour l'élément optique transparent de l'invention résulte d'une juxtaposition des intervalles correspondants pour toutes les couches. Il est donc plus large que ces derniers, et permet d'éviter des sauts de phase ayant pour amplitudes de faibles nombres entiers de fois le double de pi, pour une longueur d'onde nominale. Le chromatisme de la fonction dioptrique de l'élément optique transparent de l'invention peut ainsi être réduit.

Dans différents modes de réalisation de l'invention, un ou plusieurs des perfectionnements suivants peuvent être utilisés, isolément ou en combinaison :
- les pavages respectifs des couches qui ne coïncident pas dans la surface de projection peuvent être identiques mais décalés l'un par rapport à l'autre par une translation, par une rotation ou par une combinaison d'une translation et d'une rotation ;
- l'un au moins des pavages respectifs des couches qui ne coïncident pas dans la surface de projection peut être aléatoire ou pseudo-aléatoire. Eventuellement, l'un des pavages de l'élément peut être aléatoire ou pseudo-aléatoire en même temps qu'un autre pavage du même élément peut être périodique ou régulier ;
- lorsque les pavages qui ne coïncident pas dans la surface de projection sont décalés l'un par rapport à l'autre par une translation ou par une combinaison d'une translation et d'une rotation, et lorsque ces pavages sont chacun périodiques avec une période commune dans au moins une direction de période associée à chaque couche, une longueur de la translation selon la direction de période de l'une de ces couches peut être comprise entre 25% et 75% de la période commune, en plus d'un nombre entier de fois la période commune. De préférence, la longueur de translation peut être comprise entre 25% et 75% de la période commune ;
- plus généralement, l'élément optique transparent peut comprendre N couches dont les pavages sont identiques mais décalés chacun par une translation ou par une combinaison d'une translation et d'une rotation par rapport à l'un de ces N pavages qui est pris pour référence, N étant un nombre entier supérieur ou égal à deux. Les N pavages peuvent être chacun périodiques avec une période commune a dans au moins une direction de période qui est associée à chaque couche. Dans ce cas, une longueur de la translation du pavage de chacune des N couches par rapport au pavage de référence, selon la direction de période du pavage de référence, peut être comprise entre 25% et 75% de i·a/N en plus d'un nombre entier de fois la période commune, où i est un entier naturel de numérotation des N couches à pavages identiques, avec i variant de 0 à N-1 et i étant nul pour la couche du pavage de référence ;
- la période de pavage qui est commune aux couches à pavages identiques peut être comprise entre 3 µm (micromètre) et 1 mm (millimètre) ;
- les fonctions respectives de distribution de déphasage optique des couches à pavages identiques peuvent être elles-mêmes identiques en dehors des translations, des rotations ou des combinaisons de translations et de rotations respectives de ces couches ; et
- la fonction dioptrique de l'élément peut être invariante par toute rotation autour de son axe optique, en dehors de variations résiduelles dues à une discrétisation des valeurs des fonctions de distribution du déphasage optique.

L'élément optique transparent de l'invention peut constituer une lentille optique, en particulier une lentille ophtalmique, et notamment un verre de lunettes.

Par ailleurs, les valeurs de déphasage optique qui sont produites par chaque couche peuvent être réalisées par des variations d'un indice de réfraction d'un matériau transparent qui constitue cette couche, entre des cellules différentes. Alternativement, ces valeurs de déphasage optique qui sont produites par chaque couche peuvent être réalisées par des variations de profondeur ou de hauteur entre des cellules différentes de cette couche. Elles peuvent aussi être réalisées par des variations combinées d'indice de réfraction et de profondeur entre des cellules différentes à l'intérieur d'une même couche.

Eventuellement, des cellules contiguës d'une même couche peuvent être séparées les unes des autres par des parois intercellulaires. De telles parois peuvent éviter que des composés qui sont contenus initialement dans des cellules différentes ne se mélangent. De plus, les parois intercellulaires peuvent avoir une fonction d'espaceur entre un film de base et un film de fermeture de la couche concernée, qui sont situés de part et d'autre des cellules.

D'autres particularités et avantages de la présente invention apparaîtront dans la description ci-après d'exemples de réalisation non limitatifs, en référence aux dessins annexés, dans lesquels :
- la figure 1 est une vue en coupe d'un élément optique selon l'invention ;
- les figures 2a et 2b sont des vues en coupe de couches pouvant être utilisées dans l'élément optique de la figure 1 ;
- les figures 3a et 3b sont des vues en coupe d'autres couches pouvant être utilisées dans l'élément optique de la figure 1 ;
- les figures 4a et 4b représentent des pavages possibles pour des couches utilisées dans l'élément optique de la figure 1 ;
- la figure 5a illustre un premier mode de réalisation de l'invention, et les figures 5b et 5c illustrent deux éléments optiques transparents connus de l'art antérieur, cités à titre de comparaison ; et
- les figures 6 et 7 illustrent deux autres modes de réalisation de l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

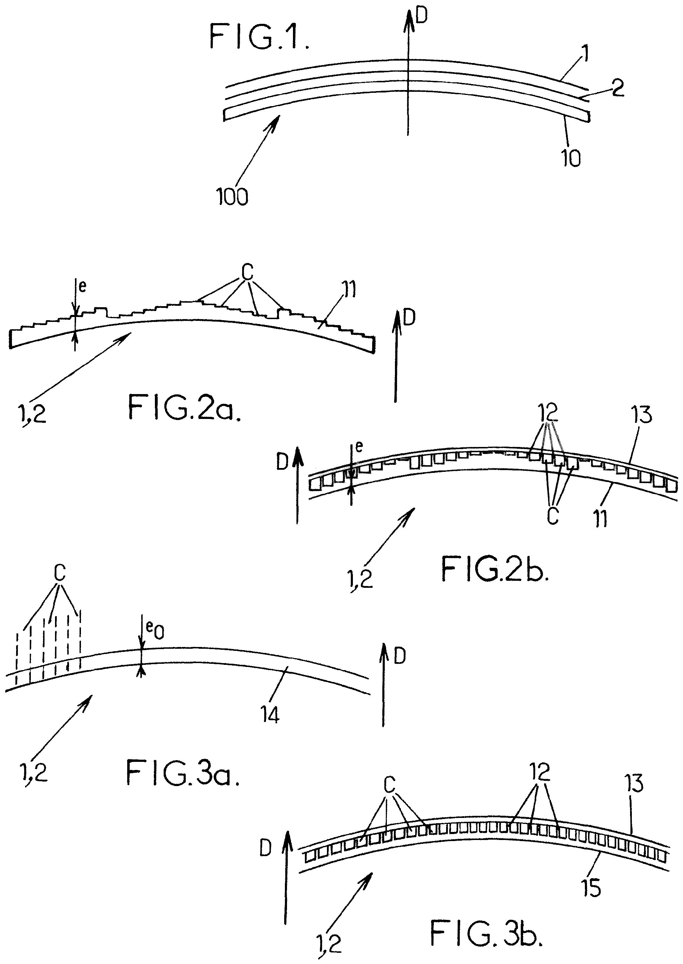

Conformément à la figure 1, un élément optique transparent 100, qui peut être un verre de lunettes, comprend un substrat 10 et au moins deux couches 1 et 2 qui sont superposées sur une face du substrat 10. Le substrat 10 peut être lui-même un verre de lunettes, et les couches 1 et 2 sont appliquées et retenues de façon permanente sur le substrat 10 d'une des façons qui sont connues de l'Homme du métier et non répétées ici. Par exemple, des films intermédiaires de matériau adhésif peuvent retenir la couche 1 sur la couche 2 d'une part, et l'ensemble des couches 1 et 2 sur le substrat 10 d'autre part.

Le substrat 10 possède une fonction dioptrique, qui peut être caractérisée par une distribution de valeurs de puissance optique et d'astigmatisme qui sont produites en des points variables de sa surface optique utile. Les couches 1 et 2 peuvent alors être destinées à modifier ces valeurs, en produisant chacune localement un déphasage optique supplémentaire pour une onde lumineuse qui traverse l'élément 100. Ce déphasage optique qui est produit par chaque couche 1, 2 varie en fonction du point de traversée de la surface utile de l'élément 100 par chaque rayon lumineux.

Il est aussi possible que le substrat 10 n'ait aucune fonction dioptrique par lui-même, mais seulement une fonction de support pour les couches 1 et 2. Dans ce cas, celles-ci confèrent à elles seules la fonction dioptrique finale à l'élément 100.

Enfin, le substrat 10 est facultatif lorsque les couches 1 et 2 possèdent une rigidité suffisante ou bien sont maintenues de façon adéquate, par exemple en étant fixées dans une monture par leur bord périphérique.

Les couches 1 et 2 sont superposées selon une direction d'empilement qui est notée D. Elles sont parallèles entre elles, et peuvent facultativement avoir une forme commune courbe.

Dans tous les cas, l'empilement des couches 1 et 2, ou éventuellement d'un nombre de couches supérieur à deux, est conçu pour produire une fonction dioptrique pour une onde monochromatique qui traverse les couches selon la direction D. D peut alors correspondre à un axe optique de l'élément 100.

Chaque couche d'un élément selon l'invention peut avoir une structure identique ou différente de celle d'une autre couche du même élément.

Les figures 2a et 2b représentent des premières structures de couches possibles, pour lesquelles le déphasage optique variable est obtenu en variant une épaisseur locale de la couche. Par exemple, pour la figure 2a, la couche 1 ou 2 est constituée d'un film transparent 11 dont l'épaisseur e varie dans des zones différentes qui sont définies sur une des faces du film. De telles variations d'épaisseur peuvent être obtenues par ablation laser, en pulvérisant localement une partie déterminée du matériau du film au moyen d'un faisceau laser. Alternativement, ces variations d'épaisseur peuvent aussi être obtenues par photolithographie. Pour une couche telle que considérée dans la présente invention, le déphasage optique qui est produit par celle-ci est constant à l'intérieur de zones qui sont juxtaposées, appelées cellules et désignées par C dans les figures. L'ensemble des cellules C recouvre la couche, ou une partie utile de celle-ci, en formant un pavage. La valeur du déphasage optique dans une cellule C identifiée est alors fixée par l'épaisseur résiduelle de la couche 11 au niveau de cette cellule. Le plus souvent, cette valeur est sélectionnée parmi un nombre fini de valeurs possibles, qui sont déterminées par le procédé utilisé pour varier localement l'épaisseur du film 11. Par exemple, le faisceau laser qui est utilisé pour pulvériser la surface du film peut fonctionner par impulsions ayant chacune une même énergie, et l'épaisseur du film est variée en adaptant le nombre d'impulsions laser qui sont dirigées à l'emplacement d'une cellule.

La figure 2b représente une structure de couche équivalente à celle de la figure 2a, dans laquelle des cellules voisines C sont séparées par une paroi 12 qui s'étend perpendiculairement à la couche. L'épaisseur variable e du film 11 est obtenue en variant une profondeur des cellules C, mesurée selon la direction D. L'épaisseur des parois de séparation 12, mesurée parallèlement à la couche, peut être négligée dans une première approche de l'invention. De préférence, les parois 12 ont des sommets qui sont situés à un même niveau commun selon la direction D. Elles peuvent alors supporter un film de fermeture 13, qui évite que des salissures comblent les cellules C et modifient la distribution de profondeur par rapport à la couche telle qu'elle a été fabriquée initialement.

Les figures 3a et 3b représentent d'autres structures de couches possibles, pour lesquelles le déphasage optique variable est obtenu en modifiant localement une valeur d'indice de réfraction lumineuse d'un matériau qui constitue la couche. Toutes les cellules C peuvent alors avoir une profondeur identique. Par exemple, pour la figure 3a, la couche 1, 2 est constituée d'un film 14 ayant une épaisseur e₀ qui est constante entre des endroits quelconques de ce film. Ce film 14 contient un matériau photo-actif qui est adapté pour que sa valeur d'indice de réfraction lumineuse puisse être modifiée lorsqu'il est irradié localement, par exemple au moyen d'un faisceau laser. Le balayage de la surface du film 14 avec le spot laser, en variant simultanément l'intensité ou le nombre d'impulsions laser délivrées entre des points différents, permet d'ajuster la valeur de l'indice de réfraction dans les cellules C. Typiquement, les valeurs d'indice de réfraction qui sont ainsi réalisables présentent des écarts maximaux de l'ordre de 0,1 ou 0,15.

Enfin, la figure 3b montre une structure de couche qui est équivalente à celle de la figure 3a, mais pour laquelle des cellules voisines sont séparées par des parois 12. Ainsi, des portions séparées du matériau photo-actif sont contenues respectivement dans les cellules C cloisonnées, et chacune d'elles peut être irradiée séparément pour ajuster sa valeur d'indice de réfraction lumineuse. Pour cela, les cellules C peuvent être initialement formées à la surface d'un film de base 15, puis remplies avec le matériau photo-actif, irradiées une à une, puis fermées collectivement par un film 13 d'un côté opposé au film de base 15. Lorsque les cellules C sont ainsi isolées les unes des autres par les parois 12, une méthode alternative pour varier la valeur d'indice de réfraction du matériau qui est contenu dans chaque cellule consiste à adopter pour ce matériau un mélange de plusieurs composés. Ces différents composés ont des valeurs respectives d'indice qui sont distinctes, et des valeurs intermédiaires sont réalisées en variant les proportions de mélange. Dans ce cas, le nombre de valeurs réalisables est limité par la quantité minimale de chaque composé qui peut être introduite dans chaque cellule de façon contrôlée. Typiquement, seize à cent vingt-huit valeurs distinctes peuvent être réalisées de cette façon pour l'indice de réfraction des cellules C.

D'autres structures de couches que celles qui viennent d'être décrites peuvent être utilisées alternativement. En particulier, des structures mixtes peuvent être mises en œuvre, dans lesquelles les variations du déphasage optique sont obtenues à la fois par des variations d'épaisseur et par des variations d'indice de réfraction de portions de matériaux transparents qui sont contenues dans les cellules.

En outre, au sein d'un même élément optique conforme à l'invention, les couches peuvent avoir des structures respectives qui sont différentes.

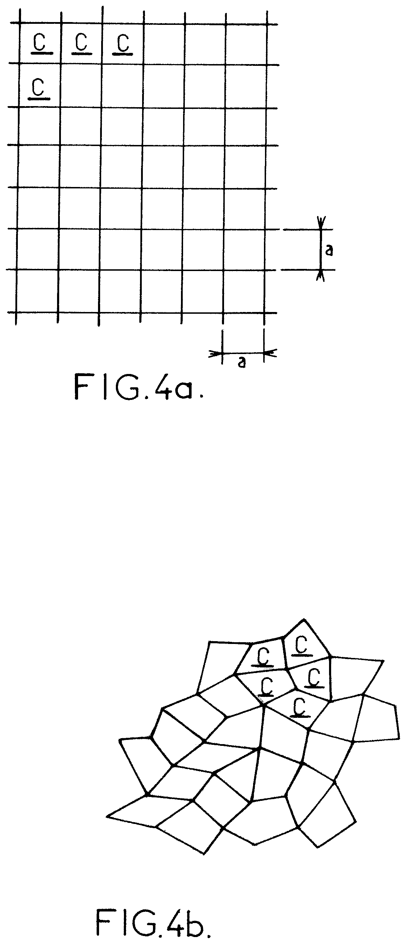

Les figures 4a et 4b montrent deux pavages différents que peuvent constituer les cellules C à l'intérieur de chaque couche. Un tel pavage peut être régulier, notamment périodique selon au moins une direction parallèle à la couche. Par exemple, le pavage peut avoir un motif carré de côté a (figure 4a), un motif triangulaire, hexagonal, etc. Alternativement, le pavage peut être aléatoire ou pseudo-aléatoire (figure 4b). Dans le cadre de la présente description, on entend par pavage pseudo-aléatoire une répartition des cellules qui est déterminée en utilisant un algorithme de construction conçu pour produire un pavage d'apparence aléatoire. En particulier, un tel pavage pseudo-aléatoire peut être obtenu en fixant une répartition initiale de centres de cellules dans une couche, puis en construisant les limites entre cellules voisines selon la méthode connue de Voronoï. Eventuellement, une telle construction peut être recommencée en déplaçant certains au moins des centres de cellules, pour augmenter un désordre du pavage cellulaire qui est finalement obtenu. Au sein d'un même élément optique conforme à l'invention, les couches peuvent avoir des pavages respectifs qui sont différents.

A titre d'illustration, les cellules C peuvent avoir des dimensions qui sont de l'ordre de quelques micromètres à plusieurs centaines de micromètres, parallèlement à la couche concernée. Leur profondeur peut être comprise entre 1 et 50 µm parallèlement à la direction D, par exemple égale à 20 µm environ.

Chaque couche est dite de type numérique lorsque le déphasage optique qui est produit par celle-ci possède des valeurs dédiées respectivement aux cellules du pavage, pouvant varier d'une cellule à une autre, et lorsque ces valeurs sont restreintes à un ensemble de valeurs discrètes qui sont déterminées initialement. Tel est le cas, notamment, lorsque le déphasage optique est ajusté par un procédé lui-même de type numérique. Une telle couche numérique ne peut alors reproduire qu'approximativement une fonction de distribution cible du déphasage optique qui est continue. L'utilisation selon l'invention d'au moins deux couches dont les pavages ne coïncident pas permet de réduire l'écart entre la distribution réelle du déphasage optique qui est produite par la superposition des couches et la distribution cible. Une telle distribution cible qui est continue peut correspondre à la fonction dioptrique d'un verre de lunettes unifocal, par exemple, ou d'un verre de lunettes progressif. Eventuellement, la fonction de distribution cible du déphasage optique peut être continue à l'intérieur de portions distinctes de la surface utile de l'élément 100, et discontinue à la limite entre deux portions de surface. Tel est le cas, notamment, lorsque la fonction de distribution cible correspond à l'effet dioptrique d'une lentille de Fresnel. De façon générale, la fonction de distribution cible peut être quelconque. Notamment, elle peut ne présenter aucune symétrie de révolution autour de l'axe optique de l'élément.

L'écart entre la fonction de distribution réelle du déphasage optique pour un élément réalisé selon l'invention et sa fonction de distribution cible peut être estimé de différentes façons.

Une première méthode est adaptée pour mettre en évidence les perturbations lumineuses que pourrait produire l'élément optique, et qui seraient susceptibles de réduire un contraste d'image. Cette première méthode consiste à comparer dans un plan sélectionné en aval de l'élément optique, des éclairements produits par une onde monochromatique incidente respectivement pour l'élément optique de l'invention et pour un élément optique de référence. Le plan d'intégration pourra judicieusement être un plan de focalisation de l'onde émergente. Cette première méthode met en évidence des directions dans lesquelles l'élément optique peut diffracter la lumière avec des intensités significatives. Selon le cas, il peut être avantageux d'écarter les directions de diffraction ainsi qu'un halo de diffusion par rapport à la direction d'image, ainsi que réduire les intensités de diffraction et diffusion.

Une seconde méthode d'estimation de l'écart, qui est couramment appelée critère de Maréchal, consiste à intégrer dans un plan de référence qui est situé en aval de l'élément optique, pour une onde monochromatique incidente qui le traverse, le carré de la différence entre les phases de l'onde émergente respectivement pour la fonction de distribution réelle et la fonction de distribution cible du déphasage optique. En particulier, le plan d'intégration peut être situé sur la face de sortie de l'élément optique. Une telle seconde méthode est particulièrement adaptée pour mettre en évidence la quantité d'erreur qui affecte la réalisation du déphasage lors de la conception d'un verre numérique.

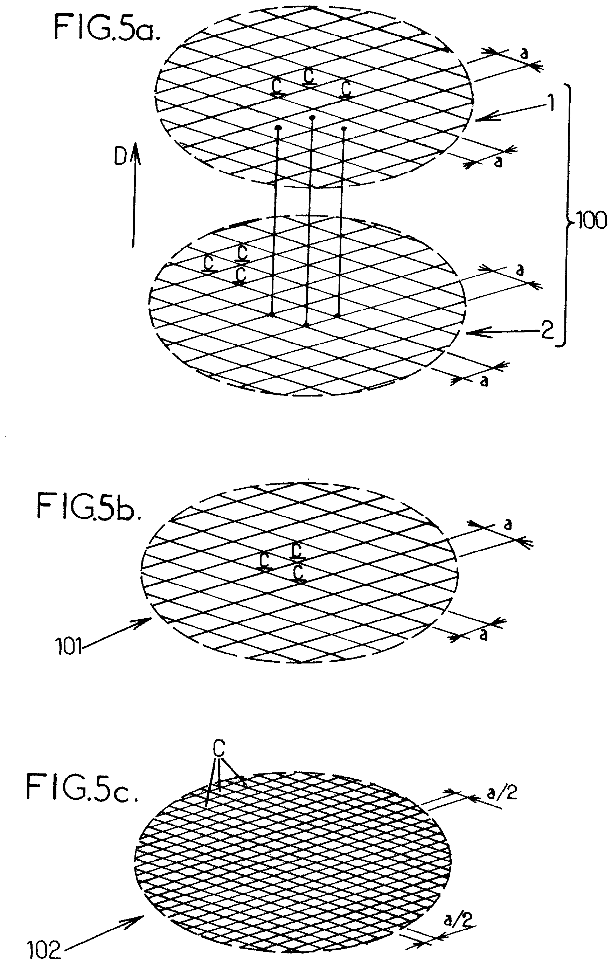

En référence à la figure 5a, on décrit un premier exemple de réalisation de l'invention pour lequel l'élément optique 100 comporte deux couches 1 et 2 à pavages identiques et carrés, de pas noté a et égal à 200 µm. Les pavages respectifs des couches 1 et 2 sont décalés par translation l'un par rapport à l'autre selon une demi-longueur de diagonale des cellules carrées. Autrement dit, le pavage de la couche 2 est translaté de a/2 simultanément selon les deux directions des côtés des cellules carrées C, par rapport au pavage de la couche 1.

Les deux couches 1 et 2 sont de type numérique et réalisées en utilisant la même technologie numérique d'ajustement du déphasage optique dans chaque cellule C. La distribution de déphasage optique de chacune des couches 1, 2 est optimisée pour reproduire la distribution cible continue d'une lentille unifocale convergente ayant une longueur focale de 2 m (mètre). Dans ces conditions, l'élément optique transparent 100 constitue une version numérique d'une lentille unifocale convergente de longueur focale égale à 1 m.

A titre de comparaison pour illustrer les bénéfices de l'invention, les figures 5b et 5c représentent respectivement deux éléments optiques de référence 101 et 102, chacun à une seule couche à pavage carré et reproduisant la distribution de déphasage optique de la lentille unifocale convergente de longueur focale 1 m. Ces deux éléments optiques de référence 101 et 102, qui n'utilisent pas l'invention, sont aussi réalisés en utilisant la même technologie numérique d'ajustement du déphasage optique dans chaque cellule C que l'élément 100 de la figure 5a.

Le pas du pavage carré de l'élément 101 de la figure 5b est égal à a, c'est-dire identique à celui de chacune des couches 1, 2 de l'élément 100 de la figure 5a. Le pas du pavage carré de l'élément 102 de la figure 5c est égal à a/2. Les diamètres des trois éléments 100, 101 et 102 sont identiques.

Dans ces conditions, le déphasage optique qui est réalisé par chaque cellule C de l'élément de référence 101 peut être le double de celui réalisé par la même cellule pour une seule des couches de l'élément 100 conforme à l'invention. En outre, les valeurs discrètes du déphasage optique qui sont réalisées par les cellules C de l'élément de référence 102 reproduisent avec moins d'erreur de discrétisation que pour l'élément de référence 101, la distribution continue de déphasage optique de la lentille convergente de longueur focale égale à 1 m, qui est utilisée comme cible pour ces trois éléments.

Les trois éléments 100, 101 et 102 peuvent alors être comparés de façon équivalente soit en mettant en oeuvre des expériences optiques réelles, soit en simulant numériquement de telles expériences. De telles simulations, qui ont été effectuées dans le cas présent, sont basées sur des calculs d'optique de Fourier. Le principe de tels calculs est supposé connu de l'Homme du métier, si bien qu'il n'est pas repris ici.

On compare tout d'abord les fonctions optiques des trois éléments 100, 101 et 102 selon la première méthode présentée ci-dessus, en les éclairant chacun par un faisceau de lumière parallèle monochromatique de longueur d'onde 633 nm (nanomètre), parallèlement à leurs axes optiques respectifs. On enregistre alors l'éclairement lumineux dans le plan focal image de chacun d'eux, situé à 1 m en aval de chaque l'élément. Les intensités maximales des pics secondaires de diffraction sont -24,3 dB (décibel) pour les éléments 100 et 102, et -18,1 dB pour l'élément 101, ces intensités étant mesurées par rapport à celle du point d'image géométrique qui est situé à l'intersection de l'axe optique avec le plan focal image. Ainsi, bien que le pas de chacune des couches de l'élément 100 conforme à l'invention soit double de celui de l'élément de référence 102, les diffractions parasites qui sont produites par ces deux éléments optiques ont des intensités comparables et inférieures à celle de l'élément de référence 101. En outre, les directions de diffraction d'ordre 1 des éléments 100 et 102 sont deux fois plus éloignées angulairement de l'axe optique que pour de l'élément 101.

On compare aussi les fonctions optiques des deux éléments 100 (figure 5a) et 101 (figure 5b) en les accolant chacun à une lentille unifocale divergente ayant une longueur focale égale à -1 m. Cette lentille divergente est réalisée de façon usuelle par variation continue de son épaisseur, afin de mettre en évidence les effets des éléments numériques 100 et 101. Les effets dioptriques des doublets qui sont ainsi obtenus correspondent aux défauts des éléments numériques 100 et 101. Pour cela, on observe à travers chacun des doublets un motif lumineux qui est situé à l'infini, par exemple une lettre C appelée motif de Landolt, de diamètre angulaire externe égal à 2,96° (degré) et d'épaisseur angulaire de trait égale à 0,74°. L'observation du motif à travers le doublet de l'élément 100 fait apparaître des images parasites qui sont alignées parallèlement aux directions des pavages, mais ces images parasites sont deux fois plus espacées pour l'élément 100 conforme à l'invention que pour l'élément de référence 101.

La même observation du motif a été effectuée avec un deuxième élément selon l'invention, qui est constitué de quatre couches à pavages encore carrés de pas égal à a, mais qui sont décalés progressivement de multiples du quart de la longueur de la diagonale des cellules. La distribution de déphasage optique dans chaque couche de ce deuxième élément reproduit celle d'une lentille convergente de longueur focale égale à 4 m. Ce deuxième élément conforme à l'invention constitue donc encore une version numérique d'une lentille convergente de longueur focale égale à 1 m. L'observation du motif de Landolt à travers le nouveau doublet qui est constitué en accolant le deuxième élément à quatre couches et la lentille divergente de longueur focale égale à -1 m montre des images parasites qui sont encore deux fois plus espacées que pour l'élément 100. Par conséquent, l'augmentation du nombre de couches dans un élément optique transparent qui est conforme à l'invention permet d'en améliorer la fonction optique.

En outre, si les deux couches 1 et 2 sont décalées au sein de l'élément 100 de la longueur a/4 selon les deux directions des côtés des cellules carrées C, au lieu de a/2, l'intensité maximale des pics secondaires de diffraction devient -23,1 dB. Par conséquent, bien que le bénéfice de l'invention pour l'élément 100 soit maximal lorsque la longueur de translation est égale à la moitié du pas a, une amélioration significative est encore obtenue pour les autres valeurs de la longueur de translation qui sont comprises entre 25% et 75% du pas a.

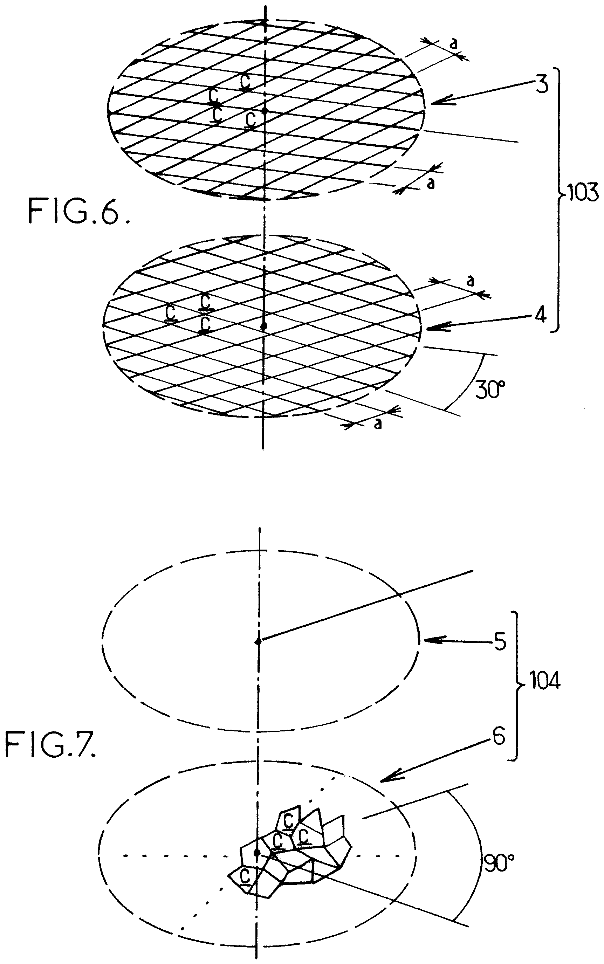

Conformément à la figure 6, un troisième élément optique transparent 103, conforme à l'invention, comprend deux couches 3 et 4 encore à pavages carrés, de pas a, par exemple égal à 200 µm. Les deux couches 3 et 4 sont identiques à la couche 1 de l'élément 100. Elles possèdent donc chacune une distribution de déphasage optique qui correspond à une lentille convergente de longueur focale égale à 2 m. Les deux couches 3 et 4 sont superposées au sein de l'élément 103 en étant tournées de 30° l'une par rapport à l'autre autour de leur axe optique commun D. L'élément 103 possède donc aussi une fonction de lentille convergente de longueur focale 1 m.

L'éclairement dans le plan focal image de l'élément 103, à 1 m en aval de cet élément lorsqu'il est éclairé par le faisceau de lumière parallèle monochromatique de longueur d'onde 633 nm, produit des pics secondaires de diffraction qui ont des amplitudes maximales égales à -24,2 dB. Le bénéfice qui est apporté par l'invention pour l'élément 103 est donc analogue à celui pour l'élément 100. Autrement dit, l'élément 100 serait peu altéré par un défaut d'alignement angulaire des deux couches 1 et 2.

L'observation du motif de Landolt à travers l'élément 103 accolé avec la lentille divergente de longueur de focale -1 m fait apparaître des images parasites qui sont beaucoup moins lumineuses que celles visibles avec l'élément 102, dans les mêmes conditions d'éclairage et d'observation.

Conformément à la figure 7, un quatrième élément optique transparent 104 selon l'invention est constitué de deux couches 5 et 6 à pavages identiques, qui sont tournées l'une par rapport à l'autre de 90° autour de l'axe optique de l'élément D. Le pavage commun des deux couches 5 et 6 est de type pseudo-aléatoire. Il a été obtenu à partir du pavage de la couche 1 décrite plus haut en décalant aléatoirement les centres des cellules C, puis en construisant les limites intercellulaires par la méthode de Voronoï. Les déphasages optiques qui sont réalisés dans les cellules C ainsi définies sont encore sélectionnés pour reproduire une lentille convergente de longueur focale égale à 2 m.

Un élément optique de référence qui n'utilise pas l'invention est constitué par une couche unique ayant le même pavage pseudo-aléatoire que chacune des couches 5 et 6, mais avec une valeur du déphasage optique dans chaque cellule C qui est doublée par rapport à la valeur pour la même cellule dans l'une de ces couches.

L'élément optique 104 et ce dernier élément de référence ont donc encore tous les deux des fonctions dioptriques qui sont similaires à celle d'une lentille convergente de longueur focale égale à 1 m. Lorsque ces deux éléments sont éclairés par le faisceau de lumière parallèle, l'élément 104 produit dans le plan focal image un halo de lumière diffuse qui est plus atténué que celui de l'élément de référence. Ainsi, dans le cas de pavages aléatoires aussi, l'invention permet de réduire les inconvénients de la nature numérique de l'élément.

Par ailleurs, au sein d'un élément optique selon l'invention, les valeurs de déphasage optique s'additionnement les unes aux autres pour des cellules qui sont superposées en appartenant à des couches différentes. Il en résulte qu'une largeur de l'intervalle des valeurs accessibles pour le déphasage total est égale à la somme des largeurs respectives des intervalles de valeurs de déphasage de chaque couche. Ainsi, un élément optique selon l'invention peut posséder des variations apparentes de déphasage optique qui sont supérieures à celles d'un élément à une seule couche, tel que connu avant la présente invention. Des fonctions dioptriques peuvent alors être produites en utilisant l'invention, qui n'étaient pas réalisables auparavant.

En particulier, les variations supérieures du déphasage optique qui sont réalisables dans un élément optique selon l'invention permettent d'éviter de mettre en oeuvre des sauts de phase de faibles amplitudes, bien que multiples du double de pi. Il est ainsi possible de n'utiliser que des sauts de phase dont les amplitudes sont supérieures à dix fois pi, par exemple. De tels sauts de phase de grandes amplitudes ne génèrent qu'un chromatisme restreint pour la fonction dioptrique de l'élément, qui est compatible avec de nombreuses applications, notamment des applications ophtalmiques.

Il est entendu que l'invention peut être reproduite en modifiant certains aspects secondaires de celle-ci par rapport aux exemples de réalisation qui ont été décrits en détail. En particulier, les modifications suivantes peuvent être utilisées, séparément ou en combinaison entre plusieurs d'entre elles :
- le nombre de couches qui sont superposées peut être quelconque, supérieur ou égal à deux ;
- des couches différentes au sein d'un même élément optique peuvent avoir des pavages différents. Par exemple, certaines couches peuvent être à pavages périodiques et d'autres peuvent être à pavages aléatoires ou pseudo-aléatoires ;
- les couches qui sont superposées dans un élément optique selon l'invention peuvent être accolées entre elles ou séparées par des espaces intermédiaires ou des films intermédiaires agencés entre deux couches successives ; et
- les valeurs cibles des déphasages qui sont produits par deux couches d'un même élément optique peuvent être différentes. Par conséquent, les fonctions respectives de distribution de déphasage des couches peuvent aussi être différentes.

## Revendications

1. Elément optique transparent (100 ; 103 ; 104) destiné à former une image d'une scène à partir de lumière issue de ladite scène et traversant ledit élément, constituant une lentille optique et comprenant une pluralité de couches (1, 2 ; 3, 4 ; 5, 6) superposées selon un axe optique de l'élément,
chaque couche s'étendant perpendiculairement à l'axe optique et étant constituée d'un pavage de cellules (C) contiguës, avec une fonction de distribution d'un déphasage optique dans chaque couche ayant une valeur constante à l'intérieur de chaque cellule de ladite couche,
une fonction dioptrique de l'élément résultant d'une combinaison des fonctions respectives de distribution de déphasage optique des couches,
dans lequel les pavages de deux au moins des couches ne coïncident pas dans une projection des dites couches sur une surface perpendiculaire à l'axe optique, de sorte que des limites entre certaines des cellules contiguës d'une des deux couches coupent des cellules de l'autre des deux couches dans ladite projection,
l'élément étant **caractérisé en ce que** des cellules (C) voisines dans chaque couche sont séparées par une paroi (12) qui s'étend perpendiculairement à ladite couche.

2. Elément selon la revendication 1, dans lequel les pavages respectifs des dites au moins deux couches (1, 2 ; 3, 4 ; 5, 6) qui ne coïncident pas dans la surface de projection sont identiques mais décalés l'un par rapport à l'autre par une translation, par une rotation ou par une combinaison d'une translation et d'une rotation.

3. Elément selon la revendication 2, dans lequel l'un au moins des pavages respectifs des dites au moins deux couches (5, 6) qui ne coïncident pas dans la surface de projection est aléatoire ou pseudo-aléatoire.

4. Elément selon la revendication 2, dans lequel les pavages respectifs de deux des couches (1, 2) qui ne coïncident pas dans la surface de projection sont décalés l'un par rapport à l'autre par une translation ou par une combinaison d'une translation et d'une rotation,
et dans lequel chaque pavage des dites deux couches est périodique avec une période commune (a) dans au moins une direction de période associée à chaque couche,
et dans lequel une longueur de la translation selon la direction de période de l'une des deux couches est comprise entre 25% et 75% de la période commune en plus d'un nombre entier de fois ladite période commune.

5. Elément selon la revendication 4, dans lequel la longueur de la translation selon la direction de période de l'une des deux couches (1, 2) est comprise entre 25% et 75% de la période commune (a).

6. Elément selon la revendication 2, dans lequel N des couches de l'élément ont des pavages respectifs qui sont identiques mais décalés chacun par rapport à l'un des N pavages pris pour référence par une translation ou par une combinaison d'une translation et d'une rotation, N étant un nombre entier supérieur ou égal à deux,
et dans lequel les pavages respectifs des dites N couches sont chacun périodiques avec une période commune a dans au moins une direction de période associée à chaque couche,
et dans lequel une longueur de la translation du pavage de chacune des dites N couches par rapport au pavage de référence, selon la direction de période dudit pavage de référence, est comprise entre 25% et 75% de i·a/N en plus d'un nombre entier de fois ladite période commune, où i est un entier naturel de numérotation des N couches à pavages identiques, avec i variant de 0 à N-1 et i étant nul pour la couche du pavage de référence.

7. Elément selon l'une quelconque des revendications 4 à 6, dans lequel la période de pavage (a) commune aux couches (1, 2) à pavages identiques est comprise entre 3 µm et 1 mm.

8. Elément selon l'une quelconque des revendications 2 à 7, dans lequel les fonctions respectives de distribution de déphasage optique des couches à pavages identiques (1, 2 ; 3, 4 ; 5, 6) sont elles-mêmes identiques en dehors des translations ou des rotations ou des combinaisons de translations et de rotations respectives des dites couches.

9. Elément selon l'une quelconque des revendications précédentes, dans lequel la fonction dioptrique de l'élément est invariante par une rotation quelconque autour de l'axe optique dudit élément, en dehors de variations résiduelles dues à une discrétisation des valeurs des fonctions de distribution de déphasage optique.

10. Elément selon l'une quelconque des revendications 1 à 9, constituant une lentille ophtalmique, telle qu'un verre de lunettes, une lentille de contact, un implant oculaire.

## Patentansprüche

1. Transparentes optisches Element (100; 103; 104), welches dazu bestimmt ist, ein Bild einer Szene aus Licht zu bilden, das von der Szene kommt und das Element durchquert, und welches eine optische Linse bildet und mehrere Schichten (1, 2; 3, 4; 5, 6) umfasst, die entlang einer optischen Achse des Elements übereinanderliegen,
wobei sich jede Schicht senkrecht zur optischen Achse erstreckt und aus einem Pflaster aus aneinander angrenzenden Zellen (C) besteht, mit einer Verteilungsfunktion einer optischen Phasenverschiebung in jeder Schicht, die im Inneren jeder Zelle der Schicht einen konstanten Wert hat,
wobei eine dioptrische Funktion des Elements aus einer Kombination der jeweiligen Verteilungsfunktionen der optischen Phasenverschiebung der Schichten resultiert,
wobei die Pflaster von wenigstens zwei der Schichten in einer Projektion dieser Schichten auf eine zur optischen Achse senkrechte Fläche nicht zusammenfallen, derart, dass Grenzen zwischen einigen der aneinander angrenzenden Zellen einer der zwei Schichten Zellen der anderen der zwei Schichten in der Projektion schneiden,
wobei das Element **dadurch gekennzeichnet ist, dass** benachbarte Zellen (C) in jeder Schicht durch eine Wand (12) getrennt sind, welche sich senkrecht zu der Schicht erstreckt.

2. Element nach Anspruch 1, wobei die jeweiligen Pflaster der wenigstens zwei Schichten (1, 2; 3, 4; 5, 6), welche in der Projektionsfläche nicht zusammenfallen, identisch, jedoch durch eine Translation, durch eine Rotation oder durch eine Kombination einer Translation und einer Rotation relativ zueinander verschoben sind.

3. Element nach Anspruch 2, wobei wenigstens eines der jeweiligen Pflaster der wenigstens zwei Schichten (5, 6), welche in der Projektionsfläche nicht zusammenfallen, zufällig oder pseudozufällig ist.

4. Element nach Anspruch 2, wobei die jeweiligen Pflaster von zwei der Schichten (1, 2), welche in der Projektionsfläche nicht zusammenfallen, durch eine Translation oder durch eine Kombination einer Translation und einer Rotation relativ zueinander verschoben sind,
und wobei jedes Pflaster der zwei Schichten periodisch mit einer gemeinsamen Periode (a) in wenigstens einer der jeweiligen Schicht zugeordneten Periodenrichtung ist,
und wobei eine Länge der Translation in der Periodenrichtung einer der zwei Schichten zwischen 25 % und 75 % der gemeinsamen Periode zusätzlich zu einem ganzzahligen Vielfachen der gemeinsamen Periode beträgt.

5. Element nach Anspruch 4, wobei die Länge der Translation in der Periodenrichtung einer der zwei Schichten (1, 2) zwischen 25 % und 75 % der gemeinsamen Periode (a) beträgt.

6. Element nach Anspruch 2, wobei N der Schichten des Elements jeweilige Pflaster aufweisen, welche identisch, jedoch jeweils bezüglich eines der N Pflaster, das als Referenz verwendet wird, durch eine Translation oder durch eine Kombination einer Translation und einer Rotation verschoben sind, wobei N eine ganze Zahl größer oder gleich zwei ist,
und wobei die jeweiligen Pflaster der N Schichten jeweils periodisch mit einer gemeinsamen Periode a in wenigstens einer der jeweiligen Schicht zugeordneten Periodenrichtung sind,
und wobei eine Länge der Translation des Pflasters jeder der N Schichten bezüglich des Referenzpflasters in der Periodenrichtung des Referenzpflasters zwischen 25 % und 75 % von i·a/N zusätzlich zu einem ganzzahligen Vielfachen der gemeinsamen Periode beträgt, wobei i eine natürliche Zahl zur Nummerierung der N Schichten mit identischen Pflastern ist, wobei i von 0 bis N-1 läuft und i für die Schicht des Referenzpflasters gleich null ist.

7. Element nach einem der Ansprüche 4 bis 6, wobei die Periode des Pflasters (a), die den Schichten (1, 2) mit identischen Pflastern gemeinsam ist, zwischen 3 µm und 1 mm beträgt.

8. Element nach einem der Ansprüche 2 bis 7, wobei die jeweiligen Verteilungsfunktionen der optischen Phasenverschiebung der Schichten mit identischen Pflastern (1, 2; 3, 4; 5, 6) selbst identisch sind, abgesehen von den jeweiligen Translationen oder Rotationen oder Kombinationen von Translationen und Rotationen der Schichten.

9. Element nach einem der vorhergehenden Ansprüche, wobei die dioptrische Funktion des Elements invariant bezüglich einer beliebigen Rotation um die optische Achse des Elements ist, abgesehen von Restabweichungen, die auf eine Diskretisierung der Werte der Verteilungsfunktionen der optischen Phasenverschiebung zurückzuführen sind.

10. Element nach einem der Ansprüche 1 bis 9, welches eine ophthalmische Linse darstellt, wie etwa ein Brillenglas, eine Kontaktlinse, ein Augenimplantat.

## Claims

1. Transparent optical element (100; 103; 104) intended to form an image of a scene from the light originating from said scene and passing through said element, forming an optical lens and comprising a plurality of layers (1, 2; 3, 4; 5, 6) superposed along an optical axis of the element,
each layer extending perpendicularly to the optical axis and consisting of a tiling of contiguous cells (C), with a distribution function of an optical phase shift in each layer having a constant value inside each cell of said layer,
a refractive function of the element resulting from a combination of the respective optical phase shift distribution functions of the layers,
in which the tilings of at least two of the layers do not coincide in a projection of said layers onto a surface perpendicular to the optical axis, so that the boundaries between some of the contiguous cells of one of the two layers cut some cells of the other of the two layers in said projection,
the element being **characterized in that** neighboring cells (C) in each layer are separated by a wall (12) that extends perpendicularly to said layer.

2. Element according to Claim 1, in which the respective tilings of said at least two layers (1, 2; 3, 4; 5, 6), which do not coincide on the projection surface, are identical but offset one relative to the other by a translation, by a rotation, or by a combination of a translation and a rotation.

3. Element according to Claim 2, in which at least one of the respective tilings of said at least two layers (5, 6), which do not coincide on the projection surface, is random or pseudo-random.

4. Element according to Claim 2, in which the respective tilings of two of the layers (1, 2), which do not coincide on the projection surface, are offset one relative to the other by a translation or by a combination of a translation and a rotation,
and in which each tiling of said two layers is periodic with a common period (a) in at least one period direction associated with each layer,
and in which a length of the translation in the period direction of one of the two layers lies between 25% and 75% of the common period, in addition to an integer number of times said common period.

5. Element according to Claim 4, in which the length of the translation in the period direction of one of the two layers (1, 2) lies between 25% and 75% of the common period (a).

6. Element according to Claim 2, in which N of the layers of the element have respective tilings that are identical but each of which is offset relative to one of the N tilings taken as a reference by a translation or by a combination of a translation and a rotation, N being an integer number greater than or equal to two, and in which the respective tilings of said N layers are each periodic with a common period a in at least one period direction associated with each layer,
and in which a length of the translation of the tiling of each of said N layers relative to the reference tiling, in the period direction of said reference tiling, lies between 25% and 75% of i·a/N in addition to an integer number of times said common period, where i is a natural integer numbering the N layers having identical tilings, with i ranging from 0 to N-1 and i being zero for the layer of the reference tiling.

7. Element according to any one of Claims 4 to 6, in which the tiling period (a) common to the layers (1, 2) having identical tilings lies between 3 µm and 1 mm.

8. Element according to any one of Claims 2 to 7, in which the respective optical phase shift distribution functions of the layers (1, 2; 3, 4; 5, 6) having identical tilings are themselves identical except for the respective translations or rotations or combinations of translations and rotations of said layers.

9. Element according to any one of the preceding claims, in which the refractive function of the element is invariant in any rotation about the optical axis of said element, except for residual variations due to a discretization of the values of the optical phase shift distribution functions.

10. Element according to any one of Claims 1 to 9, forming an ophthalmic lens such as a spectacle glass, a contact lens, or an ocular implant.
